# EUROPÄISCHE PATENTSCHRIFT

(11) **EP 3 357 769 B1**
(45) Veröffentlichungstag und Bekanntmachung des Hinweises auf die Patenterteilung: **04.12.2019**
(21) Anmeldenummer: 18152250.9
(22) Anmeldetag: 18.01.2018
(51) Int. Cl.: B60S 1/04, B60J 11/06, B60J 11/08

(54) **ABDECKUNG GEGEN LAUB UND SCHNEE FÜR KRAFTFAHRZEUGE**
COVER AGAINST LEAVES AND SNOW FOR MOTOR VEHICLES
ÉLÉMENT DE RECOUVREMENT CONTRE LE FEUILLAGE ET LA NEIGE POUR VÉHICULES AUTOMOBILES

(30) Priorität: 07.02.2017 DE 102017102305
(43) Veröffentlichungstag der Anmeldung: 08.08.2018
(73) Patentinhaber: Fiersbach, Markus, 85609 Aschheim Bayern (DE)
(72) Erfinder: Fiersbach, Markus, 85609 Aschheim Bayern (DE)
(74) Vertreter: Keilitz, Wolfgang

(56) Entgegenhaltungen:
- EP-A2- 0 302 499
- AT-A4- 503 851
- DE-A1-102010 010 021
- DE-U1-202010 013 080
- US-A1- 2010 065 232

## Beschreibung

Die Erfindung betrifft eine Abdeckung gegen Laub und Schnee für Kraftfahrzeuge, die dazu vorgesehen ist, den Bereich zwischen der Motorhaube und der Frontscheibe eines Kraftfahrzeugs abzudecken.

Bei parkenden Fahrzeugen tritt gerade im Herbst und Winter das Problem auf, dass sich im Bereich zwischen der Motorhaube und der Frontscheibe Laub und Äste ansammeln, die dann von Hand wieder entfernt werden müssen. Das biologische Material tritt häufig auch in den Motorraum ein oder sammelt sich in den seitlichen Ecken der Wanne zwischen Motorraum und Frontscheibe, wo es dann kompostiert, die Lüftungsgitter vor dem Innenraumfilter zusetzt und dadurch die Leistung der Klimaanlage deutlich vermindert. Dies führt häufig zu beschlagenen Scheiben. Weiterhin verstopft das biologische Material die Wasserabläufe in der Spritzwand, was zu Wassereinbruch im Fahrzeuginnenraum führen kann, sowie langfristig die Korrosion des Fahrzeugblechs fördert. Im Winter sammelt sich außerdem Schnee in diesem Fahrzeugbereich. Der Schnee taut nach dem Abstellen des Fahrzeuges aufgrund der Restwärme aus dem Motorraum zuerst leicht an und verwandelt sich bei tiefen Temperaturen, nach Abkühlung des Motors, innerhalb weniger Stunden zu einer starken Eisschicht. Auch dies kann den Fahrbetrieb einschränken und das Fahrzeug schädigen.

Aus dem Stand der Technik sind bereits verschiedene Abdeckungen für Kraftfahrzeuge bekannt,. So offenbart die DE 20 2010 013 080 U1 beispielsweise eine Abdeckung für den Bereich zwischen der Motorhaube und der Frontscheibe eines Fahrzeugs, die mittels Magneten oder Saugnäpfen befestigt wird. Die US 2 690 928 A und die US 2010 / 0 065 232 A1 offenbaren Abdeckungen für Windschutzscheiben, die an einem Scheibenwischer befestigt werden. Aus der DE 40 03 226 C1 ist eine Abdeckung für eine Windschutzscheibe eines Fahrzeugs bekannt, die Aussparungen für die Scheibenwischer aufweist. Die DE 89 06 565 U1 offenbart schließlich noch eine Schutzabdeckung, die mittels Magneten befestigt wird. Die bekannten Abdeckungen sind jedoch allesamt relativ aufwändig konstruiert oder sie sind schwer und unhandlich.

Es ist daher eine Aufgabe der vorliegenden Erfindung, eine Abdeckung für den Zwischenraum zwischen der Motorhaube und der Frontscheibe eines Kraftfahrzeugs zu schaffen, die besonders leicht, kostengünstig und darüber hinaus sehr einfach handhabbar ist.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

Gemäß der Erfindung wird eine Abdeckung für den Bereich zwischen der Motorhaube und der Frontscheibe eines Kraftfahrzeugs vorgeschlagen, die mehrere plattenförmige Teile umfasst. Die erfindungsgemäße Abdeckung umfasst ferner mehrere Befestigungseinrichtungen, die dazu ausgelegt sind, an den Scheibenwischern des Kraftfahrzeugs lösbar befestigt zu werden, wobei die Befestigungseinrichtungen als ein integraler Bestandteil der plattenförmigen Teile ausgebildet sind. Das heißt, die plattenförmigen Teile sind einstückig gebildet und umfassen jeweils eine Platte und wenigstens eine Befestigungseinrichtung in einem Teil. Die erfindungsgemäße Abdeckung umfasst ferner eine Lippe, die wenigstens an einem Abschnitt der Abdeckung an deren Rand vorgesehen ist, wobei die Lippe als ein integraler Bestandteil der plattenförmigen Teile ausgebildet ist. Die genannte Lippe ist vorzugsweise am Rand der plattenförmigen Teile angeformt.

Gemäß einer bevorzugten Ausführungsform der Erfindung ist die Abdeckung so dimensioniert, dass sie an einer ihrer Längsseiten auf der Motorhaube und auf der anderen Längsseite auf der Frontscheibe des Kraftfahrzeugs aufliegt. Seitlich reicht die Abdeckung vorzugsweise bis an die Karosserie des Kraftfahrzeugs und liegt dort auf der Karosserie auf.

Unter dem Begriff "Motorhaube" wird hier ein vorderer Deckel eines Fahrzeugs verstanden, der sich vor der Windschutzscheibe befindet. Dies gilt auch im Falle von Fahrzeugen, bei denen der Motor hinten angeordnet ist.

Gemäß einer ersten Ausführungsform der Erfindung umfassen die plattenförmigen Teile eine Steckverbindung, mit der sie miteinander verbunden bzw. voneinander getrennt werden können. Gemäß einer zweiten Ausführungsform der Erfindung werden die plattenförmigen Teile vorzugsweise jeweils einzeln an den Scheibenwischern befestigt und sind vorzugsweise so dimensioniert sind, dass sie im befestigten Zustand überlappen. Gemäß einer dritten Ausführungsform der Erfindung sind die plattenförmigen Teile über ein Festkörpergelenk, wie z. B. einen dünnen Abschnitt, oder über ein anderes Scharnier, miteinander verbunden. In diesem Fall ist die gesamte Abdeckung einstückig und kann gefaltet werden.

Gemäß einer Ausführungsform der Erfindung befindet sich die Lippe wenigstens an den Längsseiten der Abdeckung. Vorzugsweise verläuft die Lippe im Wesentlichen vollständig umlaufend am Rand der Abdeckung.

Die Lippe kann z. B. als ein verjüngter Bereich am Rand der Abdeckung gebildet sein. Die Abdeckung kann im Bereich der Lippe auch abgestuft sein, so dass die Lippe einer geringere Materialstärke aufweist als ein zentraler Abschnitt der Abdeckung.

Gemäß einer bevorzugten Ausführungsform der Erfindung sind die plattenförmigen Teile einschließlich der Befestigungseinrichtungen und der Lippe jeweils einstückig aus einem Kunststoffmaterial hergestellt. Als geeignetes Material kann beispielsweise PE oder PP verwendet werden.

Die vorstehend genannten Befestigungseinrichtungen sind vorzugsweise als Klammern oder Clips ausgebildet. Sie klemmen vorzugsweise aufgrund ihrer Elastizität und haben kein separates Gelenk. Die Befestigungseinrichtungen sind vorzugsweise so dimensioniert, dass sie an herkömmlichen Scheibenwischerarmen befestigt werden können.

Die genannten Befestigungseinrichtungen sind vorzugsweise an einer Unterseite der Abdeckung angeordnet.

An der Unterseite der Abdeckung befinden sich vorzugsweise auch eine oder mehrere Auflagen zum Schutz des Lacks des Kraftfahrzeugs vor Kratzern. Als Auflagen können beispielsweise Pufferelemente aus einem Schaumstoff oder einem Weichgummi eingesetzt werden. Die Auflagen sind vorzugsweise aus einem Material hergestellt, das weicher ist als das Material der Abdeckung.

### Kurze Beschreibung der Zeichnungen

Die Erfindung wird nachstehend anhand der beigefügten Zeichnungen beispielhaft näher erläutert. Es zeigen:
- Fig. 1: eine perspektivische Ansicht der Frontpartie eines Kraftfahrzeugs mit einer Abdeckung gegen Laub und Schnee gemäß einer Ausführungsform der Erfindung;
- Fig. 2: eine Draufsicht auf eine Abdeckung gegen Laub und Schnee gemäß der Ausführungsform von Fig. 1;
- Fig. 3: eine seitliche Ansicht der Abdeckung von Fig. 2;
- Fig. 4: eine Detailansicht der Steckvorrichtung zwischen zwei Teilen der Abdeckung von Fig. 2; und
- Fig. 5: eine Ansicht der Abdeckung von Figuren 2 von unten.

### Ausführungsformen der Erfindung

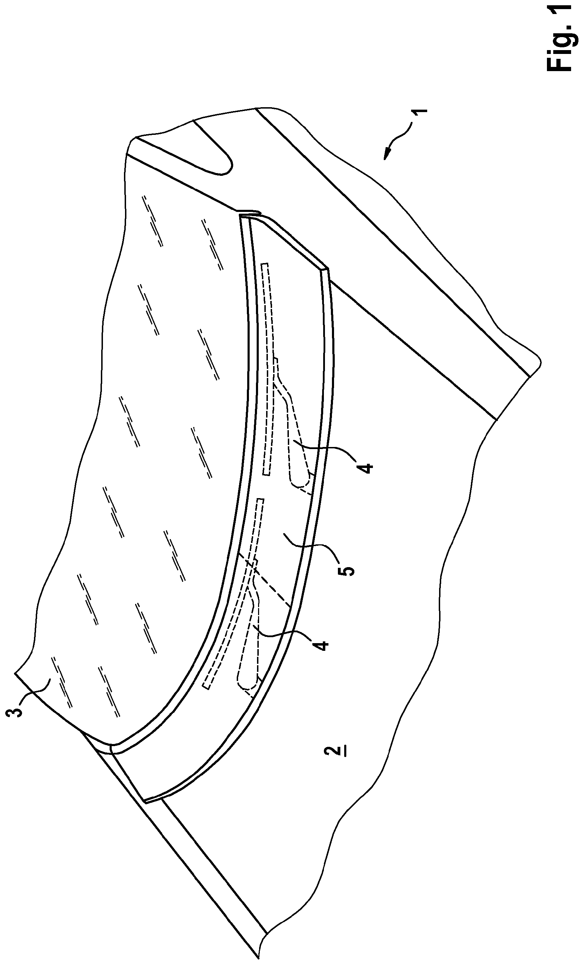

Fig. 1 zeigt eine schematische Ansicht einer Frontpartie eines Kraftfahrzeugs (1) mit einer Motorhaube (2) und einer Frontscheibe (3). Scheibenwischer (4) sind in dem Raum zwischen dem Ende der Motorhaube (2) und der Frontscheibe (3) angeordnet.

Am Boden des Zwischenraums befindet sich eine Wanne mit gitterartigen Öffnungen, über die das Fahrzeuginnere mit Frischluft versorgt wird, in der sich gerade im Herbst und Winter vermehrt Blätter oder Äste ansammeln, insbesondere wenn das Fahrzeug unter einem Baum geparkt wird. Gemäß der Erfindung ist daher eine Abdeckung (5) vorgesehen, die den Raum zwischen der Motorhaube (2) und der Frontscheibe (3) abdeckt, damit sich in der Wanne kein Laub oder anderes biologisches Material ansammeln kann.

Wie in Fig. 1 dargestellt ist, ist die Abdeckung (5) so dimensioniert, dass sie mit ihrer vorderen Längsseite auf der Motorhaube (2) und mit ihrer hinteren Längsseite auf der Frontscheibe (3) des Kraftfahrzeugs (1) aufliegt. Seitlich erstreckt sich die Abdeckung (5) bis zur Karosserie bzw. den Kotflügeln und liegt dort auf der Karosserie auf. Die erfindungsgemäße Abdeckung ist mehrteilig gebildet.

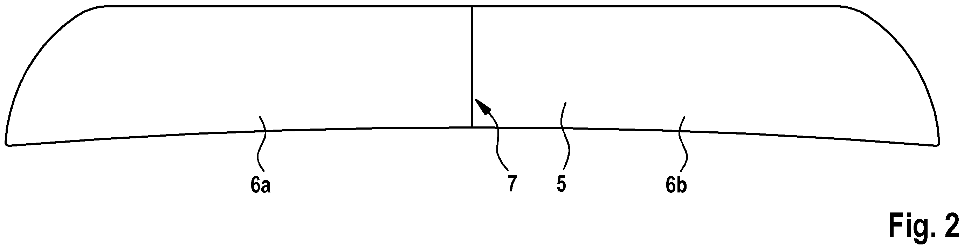

Fig. 2 zeigt eine Draufsicht auf die Abdeckung (5) von Fig. 1, die in der vorliegenden Ausführungsform zwei plattenförmige Teile (6a, 6b) umfasst, welche über eine Steckverbindung (7) zusammengesteckt sind. Alternativ könnte die Abdeckung (5) auch aus mehr als zwei plattenförmigen Teilen bestehen.

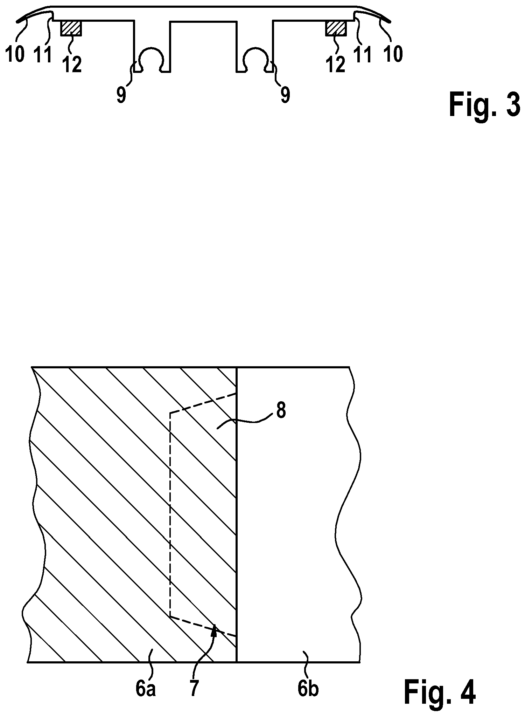

Fig. 3 zeigt eine seitliche Ansicht der Abdeckung (5) von Fig. 2. Wie zu erkennen ist, befinden sich an der Unterseite der Abdeckung (5) mehrere Befestigungseinrichtungen (9) in Form von gummierten Klammern, die eine nach unten zeigende Öffnung aufweisen und durch Ausübung von Druck auf die Arme der Scheibenwischer (4) aufgeclipst werden können.

Das Kunststoff- oder Elastomermaterial der plattenförmigen Teile (6a, 6b) ist an seinem äußeren Rand abgestuft (siehe Stufe 11) und geht in eine Lippe (10) über. Die Lippe (10) hat eine geringere Wandstärke als die plattenförmigen Teile (6a, 6b) im zentralen Bereich und ist somit elastisch. Die Wandstärke der plattenförmigen Teile kann z. B. 2 mm - 4 mm betragen.

Die plattenförmigen Teile (6a, 6b) sind zusammen mit ihren Befestigungseinrichtungen (9) und der Lippe (10) einstückig gebildet. Das heißt, die Befestigungseinrichtungen (9) und die Lippe (10) sind ein integraler Bestandteil der plattenförmigen Teile (6a, 6b). Wie in Fig. 3 zu erkennen ist, befinden sich an der Unterseite der Abdeckung (5) eine oder mehrere Auflagen (12) zum Schutz des Lacks gegen Verkratzen. Die Auflagen (12) können beispielsweise aus einem Schaumstoff- oder Weichgummimaterial hergestellt sein.

Fig. 4 zeigt eine detaillierte Ansicht der Steckverbindung (7), mit der die beiden plattenförmigen Teile (6a, 6b) zusammengesteckt bzw. voneinander getrennt werden können. Die Steckverbindung (7) umfasst bei der hier dargestellten Ausführungsform eine Lasche bzw. einen Vorsprung (8), der in eine korrespondierende Ausnehmung hineingesteckt wird, welche sich im anderen Teil (6a) befindet. Die beiden plattenförmigen Teile (6a, 6b) können somit reibschlüssig verbunden werden.

Es könnte auch eine Rastverbindung vorgesehen sein, bei der beispielsweise das Element (8) einen Rastvorsprung und die Ausnehmung eine korrespondierende Rastvertiefung bzw. Rastkante aufweist, so dass die beiden plattenförmigen Teile (6a, 6b) miteinander verrastet werden können. Die beiden plattenförmigen Teile (6a, 6b) könnten aber auch über Stifte miteinander verbunden werden, die in korrespondierende Ausnehmungen im anderen Bauteil hineingesteckt werden.

Gemäß einer anderen Ausführungsform könnte eines der plattenförmigen Teile (6a, 6b) auch Laschen aufweisen, die flexibel ausgebildet sind und nach oben bzw. unten ausgelenkt werden, wenn die beiden plattenförmigen Teile (6a, 6b) zusammen gesteckt werden. Das eine der plattenförmigen Teile (6a, 6b wird dann zwischen zwei Laschen festgeklemmt. Eine der Laschen befindet sich in diesem Fall oberhalb des festgeklemmten plattenförmigen Teils (6a) und eine oder mehrere Laschen unterhalb des festgeklemmten plattenförmigen Teils (6a).

Darüber hinaus sind aus dem Stand der Technik unzählige weitere Steckvorrichtungen bekannt, die ebenfalls Anwendung finden könnten.

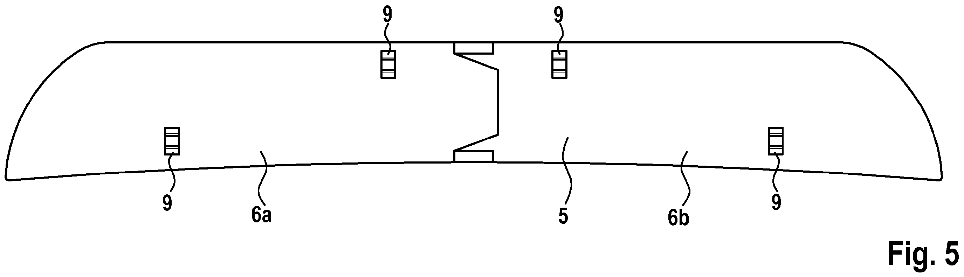

Fig. 5 zeigt schließlich noch eine Ansicht der Laubabdeckung (5) von unten. Wie zu erkennen ist, umfasst jedes plattenförmige Teil (6a, 6b) zwei Befestigungseinrichtungen (9). Es könnten aber auch mehr oder weniger Befestigungsvorrichtungen (9) vorgesehen sein.

Die gesamte Abdeckung (5) einschließlich der Befestigungseinrichtungen (9) und der Lippe (10) besteht vorzugsweise aus einem flexiblen Kunststoff- oder Elastomermaterial, wie zum Beispiel PE oder PP. Die Abdeckung (5) kann beispielsweise in einem Spritzgussverfahren einfach und kostengünstig hergestellt werden.

## Patentansprüche

1. Abdeckung (5) für den Bereich zwischen der Motorhaube (2) und der Frontscheibe (3) eines Kraftfahrzeugs (1),
**dadurch gekennzeichnet, dass**
die Abdeckung (5):
- mehrere plattenförmige Teile (6a, 6b),
- mehrere Befestigungseinrichtungen (9), die dazu ausgelegt sind, an den Scheibenwischern (4) des Kraftfahrzeugs (1) lösbar befestigt zu werden, wobei die Befestigungseinrichtungen (9) als ein integraler Bestandteil der plattenförmigen Teile (6a, 6b) ausgebildet sind, und
- eine Lippe (10) umfasst, die wenigstens an einem Abschnitt der Abdeckung (5) am Rand der Abdeckung (5) vorgesehen ist, wobei die Lippe (10) ein integraler Bestandteil der plattenförmigen Teile (6a, 6b) ist.

2. Abdeckung (5) nach Anspruch 1,
**dadurch gekennzeichnet, dass**
die Lippe (10) zumindest an den Längsseiten der Abdeckung (5) vorgesehen ist.

3. Abdeckung (5) nach Anspruch 1 oder 2,
**dadurch gekennzeichnet, dass**
die Lippe (10) im Wesentlichen umlaufend am Rand der Abdeckung (5) vorgesehen ist.

4. Abdeckung (5) nach einem der vorhergehenden Ansprüche,
**dadurch gekennzeichnet, dass**
die plattenförmigen Teile (6a, 6b) zusammen mit den Befestigungseinrichtungen (9) und der Lippe (10) jeweils einstückig aus einem Kunststoffmaterial hergestellt sind.

5. Abdeckung (5) nach einem der vorhergehenden Ansprüche,
**dadurch gekennzeichnet, dass**
die Befestigungseinrichtungen (9) als Klammern ausgebildet sind.

6. Abdeckung (5) nach einem der vorhergehenden Ansprüche,
**dadurch gekennzeichnet, dass**
die plattenförmigen Teile (6a, 6b) eine Steckverbindung (7) aufweisen, mit der sie miteinander verbunden bzw. voneinander getrennt werden können.

7. Abdeckung (5) nach einem der vorhergehenden Ansprüche,
**dadurch gekennzeichnet, dass**
die Befestigungseinrichtungen (9) zur Befestigung an einem Scheibenwischerarm ausgebildet sind.

8. Abdeckung (5) nach einem der vorhergehenden Ansprüche,
**dadurch gekennzeichnet, dass**
an der Unterseite der Abdeckung (5) Auflagen (12) zum Schutz des Lacks des Kraftfahrzeugs angeordnet sind.

9. Abdeckung (5) nach Anspruch 8,
**dadurch gekennzeichnet, dass**
die Auflagen (12) aus einem weicheren Material hergestellt sind als die Abdeckung (5).

10. Abdeckung (5) nach einem der vorhergehenden Ansprüche,
**dadurch gekennzeichnet, dass**
die Abdeckung (5) so dimensioniert ist, dass sie an einer ihrer Längsseiten auf der Motorhaube (2) und auf der anderen Längsseite auf der Frontscheibe (3) des Kraftfahrzeugs (1) aufliegt und seitlich bis an die Karosserie des Kraftfahrzeugs (1) heran reicht.

## Claims

1. Cover (5) for the region between the bonnet (2) and the windscreen (3) of a motor vehicle (1),
**characterised in that**
the cover (5) comprises:
- several plate-shaped parts (6a, 6b),
- several fastening devices (9) which are designed to be detachably fastened to the windscreen wipers (4) of the motor vehicle (1), wherein the fastening devices (9) are formed as an integral component of the plate-shaped parts (6a, 6b), and
- a lip (10) which is provided at least on one section of the cover (5) on the edge of the cover (5), wherein the lip (10) is an integral component of the plate-shaped parts (6a, 6b).

2. Cover (5) according to claim 1,
**characterised in that**
the lip (10) is provided at least on the longitudinal sides of the cover (5).

3. Cover (5) according to claim 1 or 2,
**characterised in that**
the lip (10) is substantially provided peripherally on the edge of the cover (5).

4. Cover (5) according to one of the preceding claims,
**characterised in that**
the plate-shaped parts (6a, 6b) are each produced integrally from a plastic material together with the fastening devices (9) and the lip (10).

5. Cover (5) according to one of the preceding claims,
**characterised in that**
the fastening devices (9) are formed as clamps.

6. Cover (5) according to one of the preceding claims,
**characterised in that**
the plate-shaped parts (6a, 6b) have a plug connection (7) with which they can be connected to or separated from one another.

7. Cover (5) according to one of the preceding claims,
**characterised in that**
the fastening devices (9) are formed for fastening on a windscreen wiper arm.

8. Cover (5) according to one of the preceding claims,
**characterised in that**
coatings (12) for protecting the paint of the motor vehicle are arranged on the underside of the cover (5).

9. Cover (5) according to claim 8,
**characterised in that**
the coatings (12) are produced from a softer material than the cover (5).

10. Cover (5) according to one of the preceding claims,
**characterised in that**
the cover (5) is dimensioned in such a way that it is supported on one of its longitudinal sides on the bonnet (2) and is supported on the other longitudinal side on the windscreen (3) of the motor vehicle (1) and laterally reaches up to the body of the motor vehicle (1).

## Revendications

1. Cache (5) destiné à la zone située entre le capot du moteur (2) et le pare-brise avant (3) d'un véhicule automobile (1),
**caractérisé en ce que**
le cache (5) comporte :
- plusieurs parties plates (6a, 6b),
- plusieurs organes de fixation (9) conçus pour être fixés de façon amovible aux essuie-glaces (4) du véhicule automobile (1), lesdits organes de fixation (9) étant conçus d'un seul tenant avec les parties plates (6a, 6b), et
- une lèvre (10) prévue au moins sur une partie du cache (5) sur le bord dudit cache (5), ladite lèvre (10) faisant partie intégrante des parties plates (6a, 6b).

2. Cache (5) selon la revendication 1,
**caractérisé en ce que**
la lèvre (10) est prévue au moins sur les côtés longitudinaux du cache (5).

3. Cache (5) selon la revendication 1 ou 2,
**caractérisé en ce que**
la lèvre (10) est prévue sensiblement circonférentiellement sur le bord du cache (5).

4. Cache (5) selon l'une des revendications précédentes,
**caractérisé en ce que**
les parties plates (6a, 6b) sont respectivement fabriquées, conjointement avec les organes de fixation (9) et la lèvre (10), d'un seul tenant à partir d'une matière plastique.

5. Cache (5) selon l'une des revendications précédentes,
**caractérisé en ce que**
les organes de fixation (9) sons conçus sous la forme de clips.

6. Cache (5) selon l'une des revendications précédentes,
**caractérisé en ce que**
les parties plates (6a, 6b) présentent un emboitement (7) grâce auquel elles peuvent être jointes ou séparées l'une de l'autre.

7. Cache (5) selon l'une des revendications précédentes,
**caractérisé en ce que**
les organes de fixation (9) sont conçus pour être fixés à un bras d'essuie-glace.

8. Cache (5) selon l'une des revendications précédentes,
**caractérisé en ce que**
des appuis (12) sont disposés sur la face inférieure du cache (5) pour protéger la peinture du véhicule automobile.

9. Cache (5) selon la revendication 8,
**caractérisé en ce que**
les appuis (12) sont fabriqués dans un matériau plus mou que celui du cache (5).

10. Cache (5) selon l'une des revendications précédentes,
**caractérisé en ce que**
le cache (5) est dimensionné de manière à reposer, par un de ses côtés longitudinaux, sur le capot du moteur (2) et, par l'autre de ses côtés longitudinaux, sur le pare-brise avant (3) du véhicule automobile (1), et à atteindre, latéralement, la carrosserie du véhicule automobile (1).
